# DEMANDE DE BREVET EUROPEEN

(11) **EP 1 906 034 A2**
(43) Date de publication de la demande: **02.04.2008**
(21) Numéro de dépôt: 07301377.3
(22) Date de dépôt: 19.09.2007
(51) Int. Cl.: F16C 11/06

(54) **Dispositif de liaison rotule entre un levier et une tige d'actionnement**

(30) Priorité: 27.09.2006 WO PCT/FR2006/053957
(71) Demandeur: PEUGEOT CITROËN AUTOMOBILES SA, 78140 Velizy-Villacoublay (FR)
(72) Inventeur: Thierry, Yann, 92360 Meudon la Forêt (FR); Thollet, Julien, 78180 Montigny le Bretonneux (FR)

(57) **Abrégé**

Le levier comporte un pion rigide (12), monté rigide sur ce dernier et s'étendant selon un axe (y) perpendiculaire au plan de déplacement du levier,

Le dispositif de liaison est constitué d'une tête de pion (14), rigidement fixée à l'extrémité du pion (12), d'une tête de tige (13), rigidement fixée à l'extrémité de la tige d'actionnement (11) et formant une cage de réception de type « à rotule » pour la tête de pion (14). Il est prévu un moyen de retenue (15) de la tête de pion (14) en position dans la tête de tige (13), et ce moyen de retenue (15) est une agrafe (15) filiforme qui présente une élasticité suffisante pour permettre le passage de la tête de pion (14) dans la tête de tige (13).

Mécanismes de liaison entre un levier et une tige d'actionnement. Véhicules automobiles. Systèmes d'embrayage des véhicules automobiles.

## Description

La présente invention concerne un dispositif de liaison rotule entre un levier, qui peut être une pédale (pédale d'embrayage, par exemple) ou tout autre mécanisme de type levier, et une tige d'actionnement d'un système d'actionnement, hydraulique ou autre, destiné en particulier à être utilisé sur un véhicule, notamment un véhicule automobile.

A titre d'exemple, dans un embrayage à commande hydraulique par exemple, le cylindre émetteur - ou émetteur - envoie sous pression hydraulique un signal au cylindre récepteur afin que ce dernier actionne le mécanisme d'embrayage. L'extrémité du vérin - ou tige - de l'émetteur est articulée sur la pédale de débrayage, laquelle est montée sur un axe de façon à pivoter lorsqu'on appuie dessus et pousse le vérin de l'émetteur.

Selon la demande de brevet d'invention français n° 2 864 495 au nom de la société ROBERT BOSCH GmbH, on connaît une pédale d'actionnement pour véhicule automobile, qui comporte un dispositif de liaison à rotule entre la pédale et une extrémité sensiblement sphérique d'une tige d'actionnement. Le dispositif de liaison comporte un logement de réception, d'axe transversal, de l'extrémité sphérique, muni d'une ouverture pour l'insertion de l'extrémité sphérique dans le logement de réception. Le logement de réception est rigide selon l'axe longitudinal, et applique à l'extrémité sphérique une composante selon l'axe longitudinal de l'effort appliqué à la pédale. Le logement de réception comporte, de plus, une fente pour le passage de l'élément allongé se raccordant à l'extrémité sphérique, de dimension supérieure aux dimensions transversales de l'élément allongé.

Toutefois, l'objet de cette demande de brevet d'invention s'applique essentiellement à une pédale de frein.

On connaît également un dispositif de liaison entre une pédale de débrayage et l'émetteur hydraulique associé, largement utilisé actuellement, dans lequel un axe métallique est fixé sur la pédale et sur l'extrémité duquel vient se clipper latéralement la tête de tige de l'émetteur hydraulique. La liaison est maintenue par deux ou trois ergots périphériques. Ce type de liaison présente l'inconvénient de na pas avoir un mode de montage sécurisé. En effet, le « clippage » latéral de la tête de tige sur l'extrémité de l'axe métallique peut être seulement réalisé en partie, sans que cela soit détecté immédiatement en usine.

Le but de la présente invention est de fournir un dispositif de liaison rotule entre un levier (pédale de débrayage ou autre), et une tige d'actionnement de système d'actionnement (hydraulique ou autre), qui repose sur un principe technique permettant d'avoir un montage beaucoup plus sûr de la liaison, en particulier un montage qui soit beaucoup plus de type « tout ou rien » et, de plus, un montage qui prenne bien en compte toutes les contraintes qu'impose une telle opération sur une ligne de fabrication, en particulier sur une ligne de fabrication automobile en ce qui concerne les liaisons selon la présente invention utilisées dans le domaine de l'automobile.

Un autre but de la présente invention est de fournir un tel dispositif de liaison rotule, qui permette un ajustement, et par conséquent la maîtrise, des efforts de montage et de retenue, en particulier en obtenant un effort de montage le plus faible possible et un effort de retenue le plus élevé possible.

Un autre but de la présente invention est de fournir un tel dispositif de liaison rotule, qui offre des ajustements possibles des efforts de « clippage » et de « déclippage ».

C'est également un but de la présente invention de fournir un tel dispositif, qui soit robuste, de montage et démontage plus simple, fiable et de faible coût de revient.

Enfin, c'est également un but de la présente invention de fournir un tel dispositif, qui présente des facilités de montage et de démontage lors de prestations d'après vente, en particulier lorsqu'il est appliqué sur un véhicule automobile.

Pour parvenir à ces buts, la présente invention conçoit un nouveau dispositif de liaison rotule entre un levier et une tige d'actionnement de système d'actionnement. Dans ce nouveau dispositif, le levier comporte un pion rigide, fixé sur ce dernier et qui s'étend selon un axe perpendiculaire au plan de déplacement du levier. Le dispositif comprend également une tête de pion, rigidement fixée à l'extrémité du pion, une tête de tige, rigidement fixée à l'extrémité de la tige d'actionnement et formant une cage de réception de type « à rotule » pour la tête de pion. Le dispositif comporte aussi un moyen de retenue de la tête de pion en position dans la tête de tige, qui présente une élasticité suffisante pour permettre le passage de la tête de pion dans la tête de tige.

Selon le mode préféré de réalisation de l'invention, le moyen de retenue est une agrafe positionnée dans des fentes situées à l'entrée de la tête de tige.

De préférence, la tête de tige présente sensiblement la forme d'une demie sphère creuse.

Selon un mode de réalisation de l'invention, l'agrafe présente une section de forme sensiblement circulaire, ou bien une section de forme sensiblement rectangulaire.

Selon un mode préféré de réalisation de l'invention, la tête de pion présente une forma asymétrique selon son axe longitudinal, avec une partie centrale sensiblement sphérique, de façon à permettre le mouvement de la liaison de type « à rotule » avec la tête de tige.

Et, de préférence, selon le même mode préféré de réalisation de l'invention, pour mieux ajuster les efforts de montage et de retenue de la tête de pion, la tête de pion présente une partie d'entrée sensiblement tronconique de pente moyenne, de manière à maîtriser l'effort lors du montage de ladite tête de pion dans la tête de tige, et une partie de sortie de plus forte pente, de manière à avoir un effort de retenue important exercé sur la tête de pion en position dans la tête de tige.

De préférence également, pour mieux ajuster encore lesdits efforts de montage et de retenue, l'agrafe a une section asymétrique telle que ladite section présente une partie d'entrée sensiblement rectiligne, de pente moyenne, pour permettre un effort de montage maîtrisé lors du montage de la tête de pion, et un partie de sortie concave pour permettre d'avoir un effort de retenue important de la tête de pion par l'agrafe.

De manière préférentielle, la tête de tige comporte plusieurs fentes de positionnement de l'agrafe, afin d'ajuster la position de cette dernière.

De manière préférentielle également, la tête de tige comporte au moins une rainure pour permettre de faire translater l'agrafe.

Le fond de la tête de tige comporte, de préférence, une ouverture de petit diamètre, de façon à permettre l'évacuation de l'air lors du montage de la tête de pion sur la tête de tige.

En variante, le fond de la tête de tige comporte une ouverture plus grande, de façon à permettre également le passage de l'extrémité de la tête de pion.

De préférence, il est prévu une butée d'arrêt sur l'agrafe, de façon à éviter de la perdre lors d'un mouvement de translation au démontage de la liaison rotule.

Selon une application avantageuse de l'invention, le levier peut être une pédale de débrayage d'un véhicule automobile.

Selon cette application avantageuse également, la tige d'actionnement peut être la tige d'actionnement d'un système d'actionnement hydraulique, en particulier le système d'actionnement hydraulique de freinage sur un véhicule automobile.

D'autres buts, avantages et caractéristiques de l'invention apparaîtront dans la description qui suit d'un mode de réalisation préféré, non limitatif de l'objet et de la portée de la présente demande de brevet, accompagnée de dessins dans lesquels :
- la figure 1 est une vue en perspective d'un exemple de réalisation d'une liaison rotule entre une pédale de débrayage de véhicule et la tige de l'émetteur hydraulique associé, qui illustre l'art antérieur,
- la figure 2 est une vue élargie de la liaison de la figure 1,
- la figure 3 est une vue en perspective d'un mode de réalisation d'un dispositif de liaison rotule selon la présente invention appliqué à une liaison entre une pédale de débrayage de véhicule et la tige d'actionnement du système d'actionnement hydraulique,
- la figure 4 est une vue élargie du dispositif de liaison rotule de la figure 3,
- la figure 5 est une vue élargie et éclatée du dispositif de liaison rotule de la figure 3, pour faire mieux apparaître les pièces mécaniques de la liaison en position,
- les figures 6 et 7 illustrent le démontage du dispositif de liaison rotule de la présente invention, par déplacement en translation de l'agrafe de retenue,
- la figure 8 représente un exemple de forme asymétrique de la tête de pion du dispositif de liaison rotule, selon la présente invention,
- la figure 9 représente la section de l'agrafe du dispositif de liaison rotule, selon un mode préféré de réalisation de la présente invention,
- la figure 10 représente la tête de tige de l'émetteur hydraulique, selon la présente invention, et
- la figure 11 représente une variante de réalisation de la tête de tige de l'émetteur hydraulique, selon la présente invention.

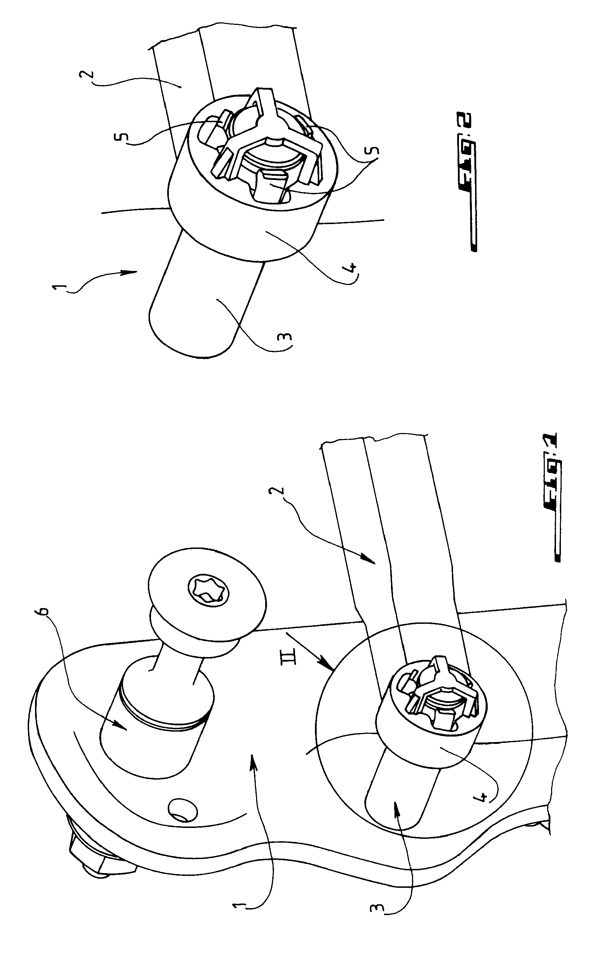

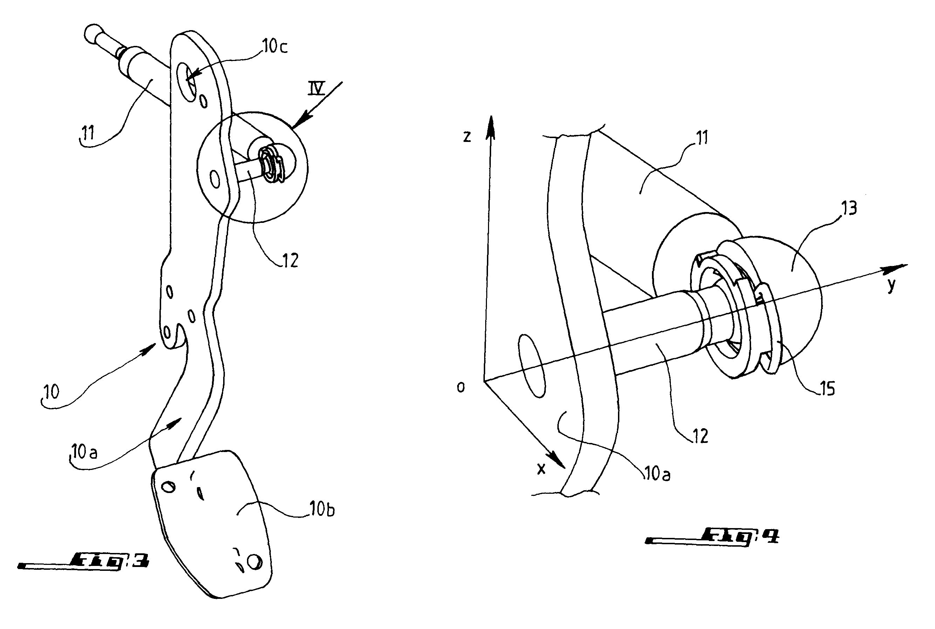

Sur le dessin des figures 1 et 2, on a représenté un exemple de réalisation, connu de l'art antérieur, d'une liaison rotule entre une pédale de débrayage 1 de véhicule automobile, qui peut avoir un mouvement de rotation autour de l'axe 6, et une tige 2 d'émetteur hydraulique associé (non représenté). Cette liaison rotule comporte un axe métallique 3, rigidement fixé sur la pédale 1 et d'axe longitudinal perpendiculaire au plan de la pédale 1, et une tête de tige 4 qui vient « se clipper » latéralement grâce à plusieurs ergots (3 ergots référencés 5, par exemple sur la figure 2).

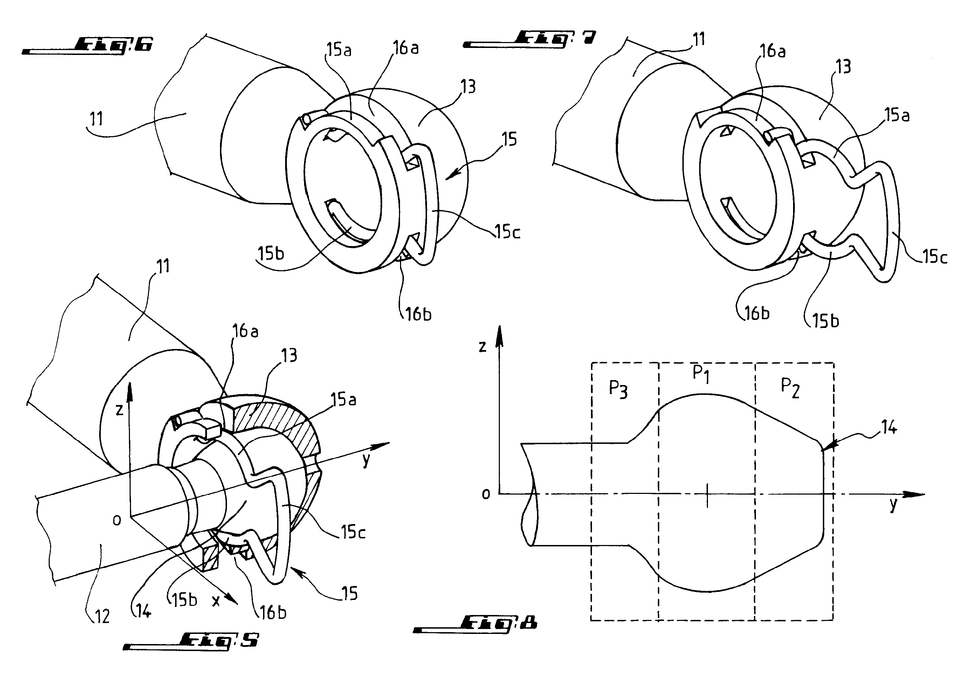

Comme déjà mentionné précédemment, pour permettre un montage mieux sécurisé de la liaison, la Demanderesse a développé un nouveau dispositif de liaison rotule, représenté dans son ensemble sur les figures 3 à 5.

A titre d'exemple non limitatif de la portée de l'invention, il est décrit ci-dessous une application de l'invention dans le domaine de l'automobile, à savoir une liaison de pédale de débrayage avec la tige d'actionnement correspondante du système hydraulique de freinage. Toutefois, il importe de noter que la présente invention s'applique, de manière générale, à tout dispositif de liaison entre un levier, pédale ou autre, et une tige d'actionnement de système d'actionnement, hydraulique ou non.

En référence aux figures 3 à 5, une pédale de débrayage - de référence générale 10 - est reliée mécaniquement à une tige 11 de cylindre émetteur ou émetteur au moyen d'un dispositif de liaison de type rotule décrit ci-dessous. Dans l'exemple représenté, la pédale 10 est formée par une lame 10a solidaire par une première extrémité supérieure d'une partie fixe du véhicule (non représentée) de manière à avoir un mouvement de rotation par rapport au véhicule (autour d'un axe 10c) et munie à son extrémité inférieure d'un élément d'application 10b d'un effort par un conducteur automobile.

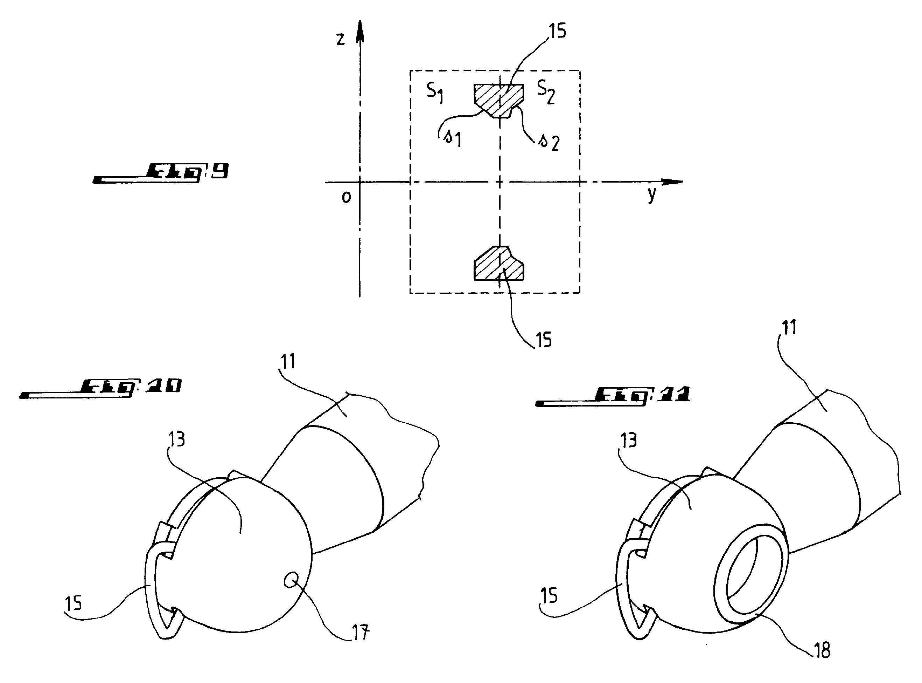

Par « liaison rotule », on entend la liaison qui apparaît entre deux solides si, au cours de leurs déplacements relatifs possibles, les deux solides conservent un même point commun. Le repérage spatial de la liaison rotule entre la pédale 10 et la tige 11 se fait par rapport à un repère local lié à la pédale 10. Il s'agit d'un repère orthonormé en « xyz » (figure 4).

Le dispositif de liaison comprend un pion rigide 12, solidaire de la pédale 10, en extension selon un axe (axe y) sensiblement perpendiculaire au plan « x0z » contenant la lame 10a de la pédale 10. Il comprend également la tête 13 de la tige 11 d'émetteur hydraulique, qui présente une forme de sphère creuse destinée à recevoir l'extrémité du pion 12, désignée tête de pion et référencée 14. La solution technique employée dans le dispositif de liaison selon la présente invention consiste à avoir une tête 13 de tige 11 qui forme une cage « à rotule » pour la tête de pion 14, fermée par un moyen de retenue élastique qui se déforme au passage de la tête de pion 14 et revient à sa forme d'origine lorsque la tête de pion 14 est positionnée dans la tête de tige 13.

Le moyen de retenue est constitué par une agrafe 15, située à l'entrée de la tête de tige 13, dont la forme et l'élasticité spécifique permettent le passage et ensuite la retenue en position de la tête de pion 14. L'agrafe 15, relativement filiforme, est conformée en deux branches 15a et 15b (voir figures 5 à 8), sensiblement en arcs de cercle, reliées par une branche de liaison 15c. Lors du montage de la tête de pion 14, celle-ci est pressée contre les branches 15a et 15b de l'agrafe 15, qui s'écartent dans le plan « x0z » (représenté sur la figure 4) et laissent passer la tête de pion 14. Puis, par la conformation élastique de l'agrafe 15, les deux branches 15a et 15b reviennent en position d'origine pour rétrécir la section de passage et retenir ainsi la tête de pion 14 en position dans le logement de réception de la tête de tige 13.

Les branches 15a et 15b de l'agrafe 15 sont disposées dans des fentes 16a, respectivement 16b, de la tête de tige 13.

Le démontage de la liaison rotule, en particulier en service après-vente, se fait de manière aisée et rapide en faisant translater latéralement l'agrafe 15, comme on peut le voir sur les dessins des figures 6 et 7. Dans la position « démontée », représentée sur le dessin de la figure 7, les deux branches 15a et 15b de l'agrafe 15 ne viennent plus rétrécir la section et, par conséquent, ne retiennent plus la tête de pion 14 dans le logement de réception de la tête de tige 13.

La tête de pion 14 est de forme sensiblement sphérique et l'agrafe 15 présente une section de forme sensiblement circulaire, ou bien une section de forme sensiblement rectangulaire.

Dans le cas d'une agrafe 15 rapportée, il est avantageux de prévoir une butée d'arrêt pour éviter de perdre l'agrafe lors de la translation latérale.

Comme indiqué précédemment, c'est aussi un but de la présente invention de fournir un dispositif de liaison rotule, dans lequel la conformation des pièces en liaison permette d'ajuster les efforts de montage et de retenue de la tête de pion 14 dans la tête de tige 13. En d'autres termes, on cherche à avoir un effort de montage le plus faible possible et un effort de retenue le plus élevé possible.

A cette fin, la tête de pion 14, selon un mode préféré de réalisation de l'invention, n'est pas sphérique et n'est pas retenue par une agrafe de section transversale sensiblement circulaire ou rectangulaire, ce qui ne permettrait pas d'obtenir un effort de montage différent de l'effort de retenue.

On a représenté sur le dessin de la figure 8 un exemple de réalisation de la tête de pion 14 selon la présente invention, permettant d'obtenir un effort de montage différent de l'effort de retenue.

La tête de pion 14 présente trois parties fonctionnelles dont les profils sont différents, désignées P₃, P₁ et P₃, selon la direction de l'axe y.

La partie P₁ est la partie centrale sensiblement sphérique, pour permettre les mouvements de la liaison rotule entre la tête de pion 14 et la tête de tige 13.

La partie P₂ ou partie « d'entrée » du pion 12 est de forme sensiblement tronconique et offre à l'agrafe 15, lors du montage de la tête de pion 14 dans la tête de tige 13, une surface de contact de pente moyenne permettant de maîtriser l'effort de montage dans des limites de faible valeur.

La partie P₃ ou partie « de sortie » du pion 12 présente une pente plus forte, permettant d'avoir un effort de retenue beaucoup plus important que l'effort de montage.

Pour mieux ajuster la valeur des efforts de montage et de retenue, l'agrafe 15 a une section dans le plan « z0y » qui est asymétrique. On a représenté un exemple de réalisation de cette section asymétrique de l'agrafe 15 sur le dessin de la figure 9. La section présente deux parties fonctionnellement différentes désignées S₁ et S₂. La partie d'entrée S1 est de section sensiblement rectiligne s₁, de pente moyenne, pour permettre un effort de montage maîtrisé lors du montage de la tête de pion 14 contre l'agrafe 15. La partie de sortie S2, concave, représentée par la ligne s₂, permet d'obtenir un effort de retenue de la tête de pion 14 par l'agrafe 15 beaucoup plus élevé que l'effort de montage.

On a représenté sur le dessin de la figure 10 un exemple de réalisation de la tête de tige 13 selon la présente invention. La tête de tige 13 comporte, dans sa partie arrière, une ouverture 17, relativement petite en diamètre, qui permet l'évacuation de l'air lors du montage de la tête de pion 14 sur la tête de tige 13.

En variante, comme on peut le voir sur le dessin de la figure 11, le fond de la tête de tige 13 comporte une ouverture 18, de diamètre plus important que le diamètre de l'ouverture 17, de façon à permettre le passage de l'extrémité de la tête de pion 14 et à permettre aussi l'évacuation de l'air lors du montage de la tête de pion 14 sur la tête de tige 13.

La tête de tige 13 peut comporter plusieurs fentes de positionnement de l'agrafe 15, afin d'ajuster la position de cette dernière. De plus, la tête de tige 13 comporte au moins une rainure pour permettre de faire translater l'agrafe 15.

Comme mentionné précédemment, la présente application n'est pas limitée aux applications dont un mode de réalisation est décrit ci-dessus.

L'invention s'applique à toute liaison rotule entre un organe mécanique de type levier, pédale ou autre, et une tige d'actionnement de système hydraulique ou autre.

De plus, quelque soient les applications envisagées, d'autres modes de réalisation peuvent être conçus par l'homme de métier sans sortir du cadre et de la portée de la présente invention.

## Revendications

1. Dispositif de liaison rotule entre un levier (10) et une tige d'actionnement (11) de système d'actionnement, le levier (10) comportant un pion rigide (12), fixé sur ce dernier et s'étendant selon un axe perpendiculaire au plan de déplacement du levier (10), **caractérisé en ce que** ledit dispositif est constitué d'une tête de pion (14), rigidement fixée à l'extrémité du pion (12), d'une tête de tige (13), rigidement fixée à l'extrémité de la tige d'actionnement (11) et formant une cage de réception de type « à rotule » pour la tête de pion (14), et d'un moyen de retenue (15) de la tête de pion (14) en position dans la tête de tige (13), ledit moyen de retenue (15) présentant une élasticité suffisante pour permettre le passage de la tête de pion (14) dans la tête de tige (13).

2. Dispositif selon la revendication 1, **caractérisé en ce que** ledit moyen de retenue est une agrafe (15) positionnée dans des fentes (16a, 16b) situées à l'entrée de la tête de tige (13).

3. Dispositif selon la revendication 1, **caractérisé en ce que** la tête de tige (13) présente sensiblement la forme d'une demie sphère creuse.

4. Dispositif selon les revendications 2 et 3, **caractérisé en ce que** l'agrafe (15) présente une section de forme sensiblement circulaire.

5. Dispositif selon les revendications 2 et 3, **caractérisé en ce que** l'agrafe (15) présente une section de forme sensiblement rectangulaire.

6. Dispositif selon la revendication 1, **caractérisé en ce que** la tête de pion (14) présente une forma asymétrique selon son axe longitudinal (y), avec une partie centrale (P₁) sensiblement sphérique, de façon à permettre le mouvement de la liaison de type « à rotule » avec la tête de tige (13).

7. Dispositif selon la revendication 6, **caractérisé en ce que** la tête de pion (14) présente une partie d'entrée (P₂) sensiblement tronconique de pente moyenne, de manière à maîtriser l'effort lors du montage de ladite tête de pion (14) dans la tête de tige (13), et une partie de sortie (P₃) de plus forte pente, de manière à avoir un effort de retenue important exercé sur la tête de pion (14) en position dans la tête de tige (13).

8. Dispositif selon l'une quelconque des revendications 2 et 6, **caractérisé en ce que** l'agrafe (15) a une section asymétrique telle que ladite section présente une partie d'entrée (S1) sensiblement rectiligne, de pente moyenne, pour permettre un effort de montage maîtrisé lors du montage de la tête de pion (14), et une partie de sortie (S2) concave pour permettre d'avoir un effort de retenue de la tête de pion (14) par l'agrafe (15) important.

9. Dispositif selon la revendication 1, **caractérisé en ce que** la tête de tige (13) comporte plusieurs fentes de positionnement de l'agrafe (15), afin d'ajuster la position de cette dernière.

10. Dispositif selon l'une quelconque des revendications 2 et 9, **caractérisé en ce que** la tête de tige (13) comporte au moins une rainure pour permettre de faire translater l'agrafe.

11. Dispositif selon l'une quelconque des revendications 1 à 10, **caractérisé en ce que** le fond de la tête de tige (13) comporte une ouverture (17) de petit diamètre, de façon à permettre l'évacuation de l'air lors du montage de la tête de pion (14) sur la tête de tige (13).

12. Dispositif selon l'une quelconque des revendications 1 à 10, **caractérisé en ce que** le fond de la tête de tige (13) comporte une ouverture (18), de façon à permettre le passage de l'extrémité de la tête de pion (14).

13. Dispositif selon la revendication 2, **caractérisé en ce qu'**il est prévu une butée d'arrêt sur ladite agrafe (15), de façon à éviter de la perdre lors d'un mouvement de translation au démontage de la liaison rotule.

14. Dispositif selon la revendication 1, **caractérisé en ce que** le levier (10) est une pédale de débrayage d'un véhicule.

15. Dispositif selon la revendication 1, **caractérisé en ce que** la tige d'actionnement (11) est la tige d'actionnement d'un système d'actionnement hydraulique.
